**Europäisches Patentamt**

**European Patent Office**

**Office européen des brevets**

(19)

(11) Veröffentlichungsnummer: **0 155 358**
**B1**

(12)

# EUROPÄISCHE PATENTSCHRIFT

(45) Veröffentlichungstag der Patentschrift:
23.09.87

(51) Int. Cl.⁴: **B 65 D 51/00**

(21) Anmeldenummer: **84113951.2**

(22) Anmeldetag: **17.11.84**

(54) **Verschlusseinrichtung eines Behälters.**

(30) Priorität: **22.02.84 DE 8405440 U**

(43) Veröffentlichungstag der Anmeldung:
**25.09.85 Patentblatt 85/39**

(45) Bekanntmachung des Hinweises auf die Patenterteilung:
**23.09.87 Patentblatt 87/39**

(84) Benannte Vertragsstaaten:
**DE FR GB IT**

(56) Entgegenhaltungen:
**EP-A-0 027 970**
**FR-A-1 278 533**
**FR-A-2 483 860**
**US-A-2 306 699**

(73) Patentinhaber: **Walter Alfmeier GmbH + Co Präzisions- Baugruppenelemente, Industriestrasse 5, D-8830 Treuchtlingen (DE)**

(72) Erfinder: **Hofmann, Heinz A., Ludwig Thoma Strasse 28, D-8830 Treuchtlingen (DE)**

(74) Vertreter: **Tergau, Enno, Patentanwälte Tergau & Pohl Postfach 11 93 47 Hefnersplatz 3, D-8500 Nürnberg 11 (DE)**

EP 0 155 358 B1

LIBER, STOCKHOLM 1987

## Beschreibung

Die Erfindung betrifft eine Verschlußeinrichtung mit den im Oberbegriff des Anspruches 1 aufgeführten Merkmalen. Eine solche Verschlußeinrichtung ist beispielsweise aus EP-B1-0 027 970 bekannt.

Beim Verschließen des Verschlußdeckels der bekannten Verschlußeinrichtung wird der Dichtungsring durch seine radiale Aufspreizung in eine in die Innenwand des Füllstutzens eingeformte Ringnut formschlüssig eingepreßt. Der Dichtungsring erfüllt dabei sowohl die Dichtals auch die Haltefunktion. Unter extremen Belastungen, beispielsweise bei einem Unfall, kann sich die Haltekraft des bekannten Verschlußdeckels als nicht ausreichend erweisen. Außerdem ist die mit dem Öffnen des Verschlußdeckels einhergehende Be- oder Entlüftung von unter Unter- oder Überdruck stehenden Behältern problematisch.

Der Erfindung liegt die Aufgabe zugrunde, eine Verschlußeinrichtung der eingangs genannten Art so auszubilden, daß sie in Schließstellung auch unter extremen Belastungen eine hohe Haltekraft auf den Verschlußdeckel ausübt und eine Be- oder Entlüftung des Behälterinnenraums ohne Gefährdung der Bedienungsperson auch bei großen Druckunterschieden gestattet. Diese Aufgabe wird durch die Kennzeichnungsmerkmale des Anspruches 1 gelöst. Die Lösung sieht vor, daß die Halte- und die Dichtfunktion des Verschlußdeckels durch getrennte Funktionsteile bewirkt werden. Bei der Öffnungsbewegung des Schwenkhebels beispielsweise wird zunächst die Spreizung des Dichtungsringes und damit die Dichtung aufgehoben, während die Halterung bzw. Verriegelung noch vollständig aufrechterhalten ist. In dieser Mittelstellung des Schwenkhebels kann beispielsweise im Behälter - man denke z. B. an den Kühlwasserbehälter von Kraftfahrzeugen - aufgestauter Überdruck entweichen, ohne daß der Verschlußdeckel vom Einfüllstutzen gelöst ist. Erst eine Weiterschwenkung des Schwenkhebels hebt auch die Verriegelung des Verschlußdeckels gegenüber dem Einfüllstutzen auf.

Die Funktion der Spreizlamellen für den Dichtring ist ähnlich der der Spreizlamellen bei der vorbekannten Konstruktion der eingangs genannten Art. Durch das Kennzeichnungsmerkmal des Anspruches 3 ist gewährleistet, daß die Schwenklager der Spreizlamellen bei der Schließ- und Öffnungsbewegung des Schwenkhebels jeweils durch eine Totpunktlage gegenüber dem Dichtungsring hindurchgeführt werden. Dadurch bedarf es in Schließstellung des Verschlußdeckels keiner besonderen, eine Aufrechterhaltung der Dichtstellung gewährleistenden Verschlußeinrichtung, da beispielsweise zum Öffnen des Verschlußdeckels die Lager der Spreizlamellen nur durch Einwirkung äußerer Zugkräfte durch ihre Totpunktlage gegenüber dem Dichtring in die Dichtöffnungsstellung hindurchführbar sind.

Durch die Kennzeichnungsmerkmale des Anspruches 4 gerät der Schwenkhebel im zweiten Teilbereich seiner Öffnungsbewegung außer Eingriff mit dem Hubteil. Dieses verharrt danach in seiner die Ringdichtung freigebenden Öffnungsstellung, während der Schwenkhebel zur Entriegelung des Verschlußdeckels weiterbewegbar ist. Die Steuerung der Entriegelungsbewegung erfolgt durch einen mit dem Schwenkhebel in antriebsmäßiger Verbindung stehenden Steuerschieber, der gemäß den Kennzeichnungsmerkmalen des Anspruches 17 auf zwei in Radialrichtung verschiebbare Riegel einwirkt. Dabei sind die Steuernuten des Steuerschiebers so gestaltet, daß während des ersten, nur der Be- und Entlüftung dienenden Teiles der Öffnungsbewegung des Schwenkhebels die beiden Riegel unverändert in ihrer Verriegelungsstellung verbleiben und erst im zweiten Bereich der Schwenkbewegung radial nach innen aus der Entriegelungsstellung zurückgeführt werden. Selbst in der Öffnungs-Schwenkendstellung des Schwenkhebels besteht immer noch ein geringfügiger Hintergriff zwischen den Riegeln und den Hinterschneidungen. Dieser Hintergriff wird indessen durch eine geringfügige, auf den Verschlußdeckel zu dessen Entnahme aus dem Füllstutzen in Axialrichtung einwirkende Zugkraft aufgehoben dadurch, daß die Schenkel des Steuerschiebers in dieser Stellung mit ihren Innenseiten nicht mehr an einem Verschlußdeckelgehäuseteil, beispielsweise dem Hubteil, anliegen, sondern geringfügig in Richtung aufeinander zurückfedern können und damit ein vollständiges Hinaustreten der Riegel aus den Hinterschneidungen des Füllstutzens ermöglichen. Durch dieses Merkmal wird weiter bewirkt, daß beim Aufsetzen des Verschlußdeckels auf den Füllstutzen die Riegel unter dem federnden Rückstelldruck der Schenkel des Steuerschiebers in die Hinterschneidungen einfallen, sobald der Verschlußdeckel seine axiale Verschluß-Sollstellung gegenüber dem Füllstutzen eingenommen hat. Danach kann der Verschlußdeckel nur noch unter Aufbringung einer gewissen Zugkraft wieder vom Füllstutzen abgenommen werden. Dies zeigt der Bedienungsperson an, daß der Füllstutzen seine Soll-Ausgangsstellung für die anschließende Schließbewegung eingenommen hat und daß der Verschlußdeckel verschlußbereit ist.

Die Erfindung wird an Hand eines in den Figuren dargestellten Ausführungsbeispieles näher erläutert. Es zeigen:

Fig. 1 einen in der Schwenkebene des Schwenkhebels liegenden Längsschnitt durch den im Füllstutzen in Verriegelungsstellung einsitzenden Verschlußdeckel,

Fig. 2 eine Seitenansicht der Verschlußeinrichtung - teilweise im Schnitt - gemäß Pfeil II in Fig. 1,

Fig. 3 einen Teil-Querschnitt entsprechend der Linie III-III in Fig. 2,

Fig. 4 einen verkleinerten Querschnitt durch die Verschlußeinrichtung in deren Schließstellung entlang der Schnittlinie IV-IV in Fig. 5, wobei der linke Halbschnitt um 90° gedreht gezeichnet ist,

Fig. 5 eine Draufsicht auf den Verschlußdeckel gemäß Fig. 4, teilweise im Schnitt entsprechend der Linie V-V in Fig. 4,

Fig. 6 eine Darstellung analog Fig. 4 in halboffener Stellung des Schwenkhebels des Verschlußdeckels, in der die Dichtung aufgehoben, die Verriegelung jedoch noch aufrechterhalten ist,

Fig. 7 eine Draufsicht auf den Verschlußdeckel gemäß Fig. 6, teilweise im Schnitt entsprechend der Linie VII-VII in Fig. 6,

Fig. 8 eine Schnittdarstellung analog Fig. 4 und Fig. 6 bei in vollständiger Öffnungsstellung befindlichem Schwenkhebel des Verschlußdeckels,

Fig. 9 eine Draufsicht auf den Verschlußdeckel gemäß Fig. 8, teilweise im Schnitt entlang der Linie IX-IX in Fig. 8,

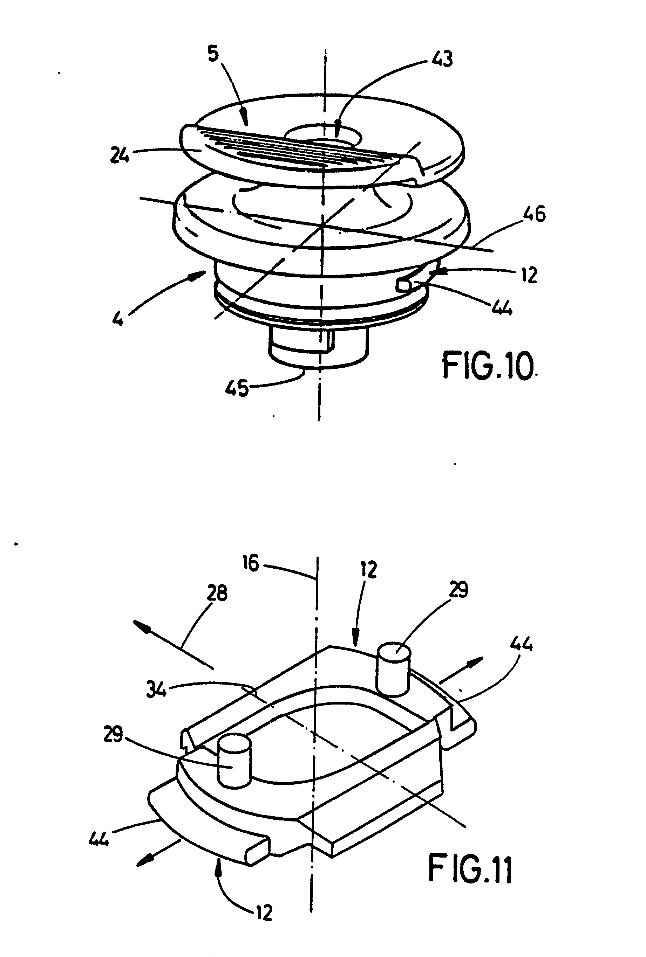

Fig. 10 eine perspektivische Darstellung des Verschlußdeckels,

Fig. 11 eine perspektivische Darstellung der beiden Riegel in gegenseitiger Zuordnung.

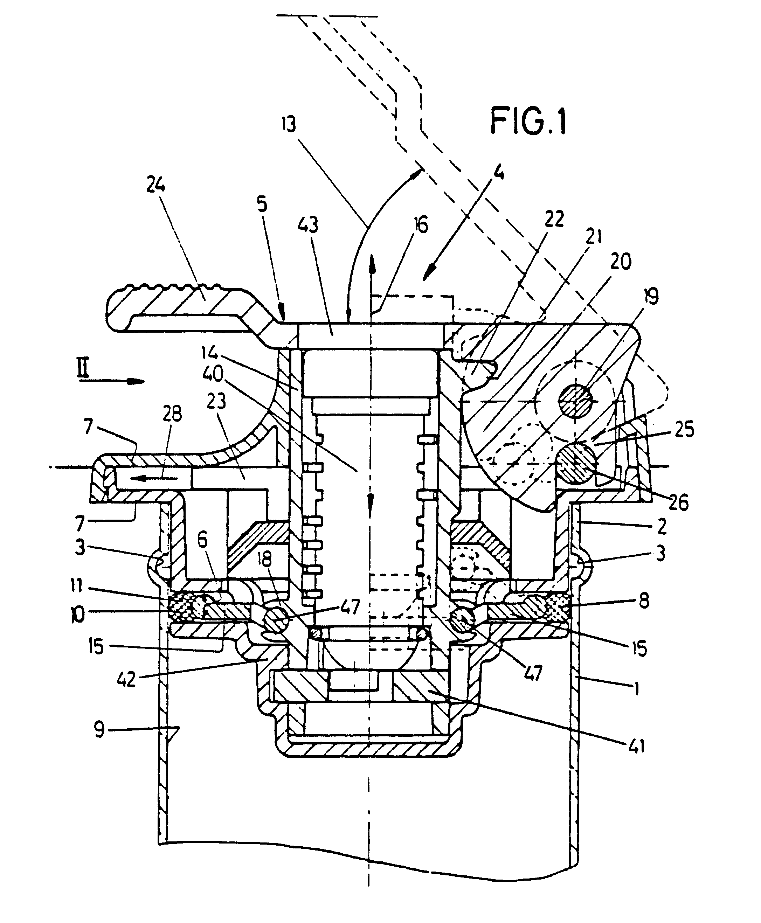

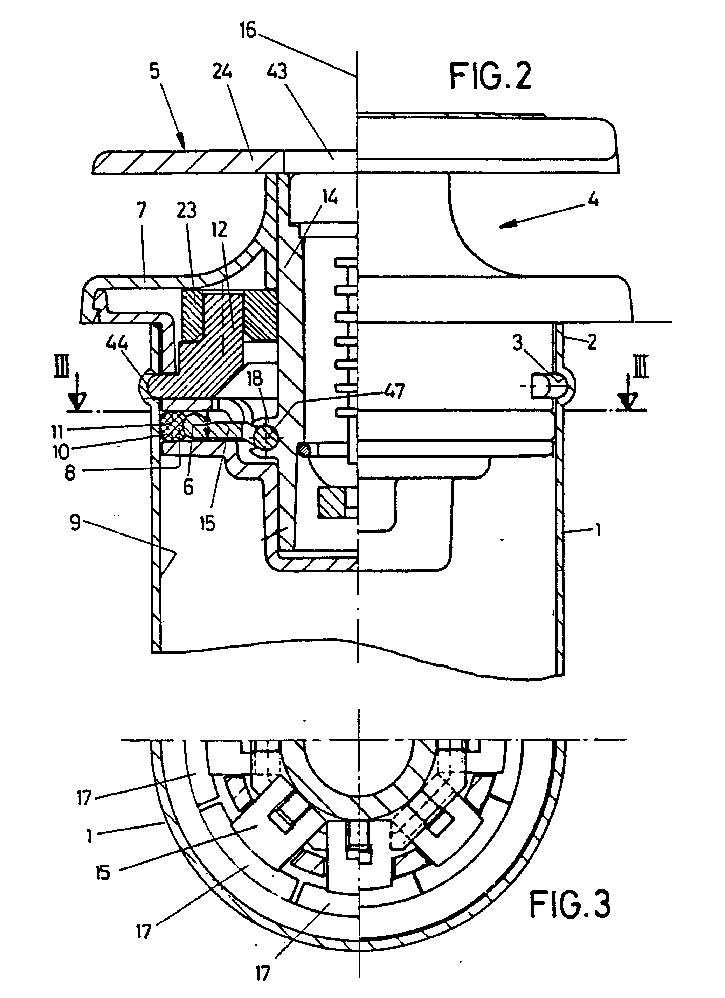

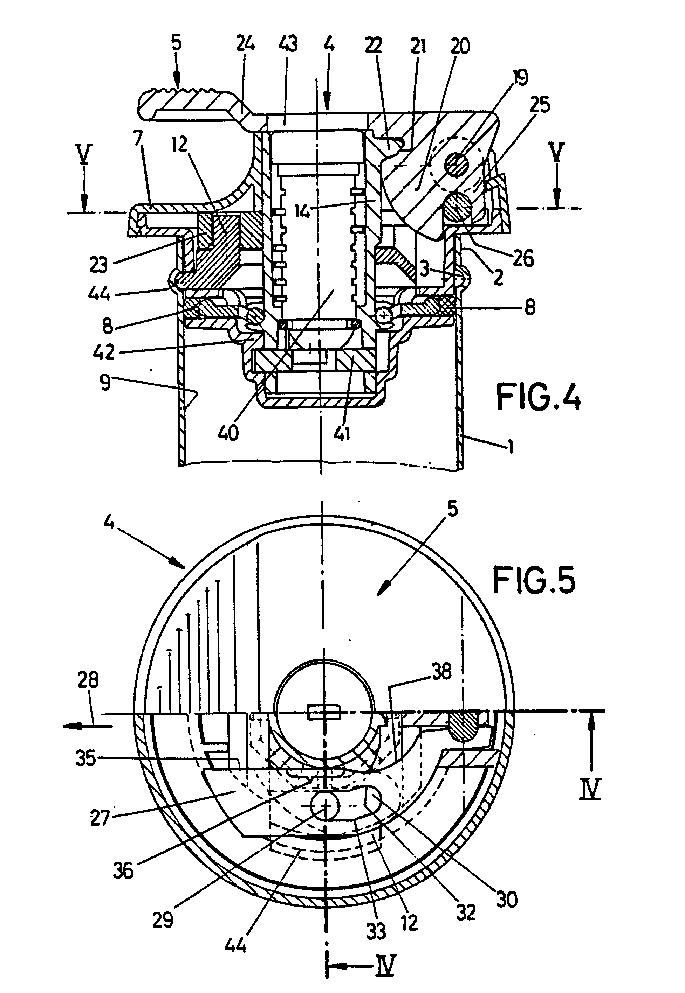

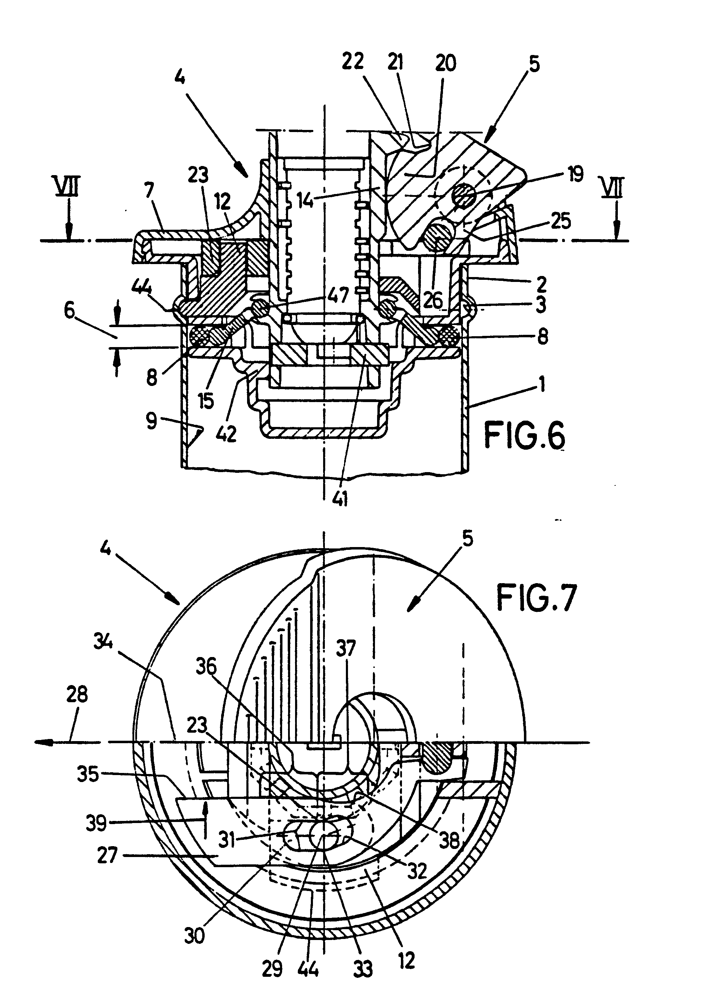

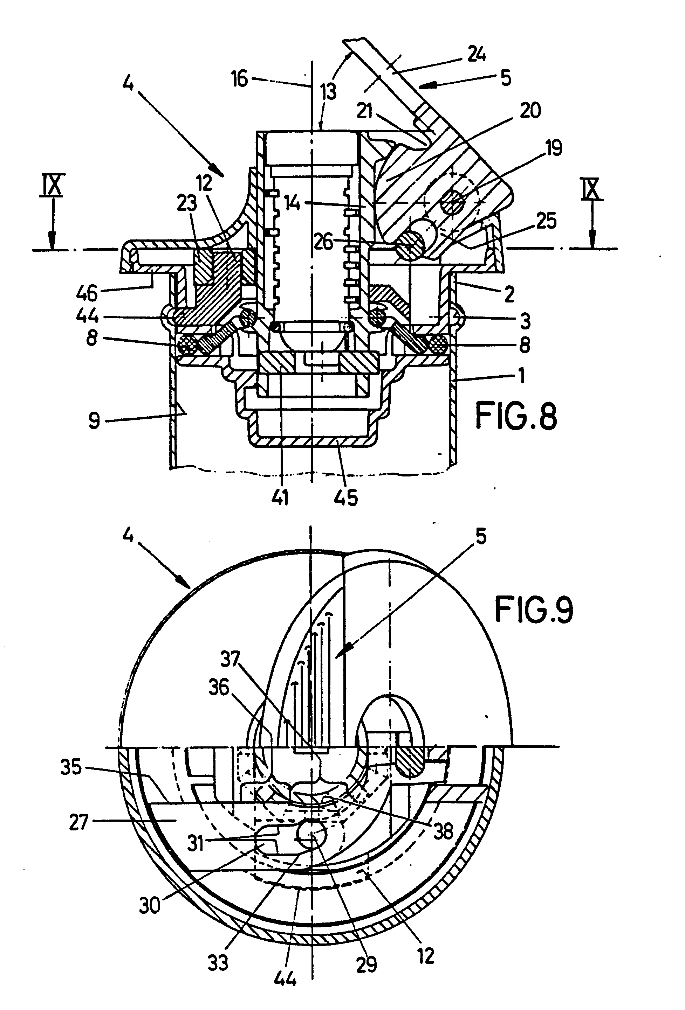

Der nicht näher dargestellte Behälter ist mit einem Füllstutzen 1 versehen. Der Füllstutzen 1 weist im Bereich seines oberen Endes 2 eine ringförmige Hinterschneidung 3 auf, die im Falle des Ausführungsbeispieles durch eine in die Innenwand des Füllstutzens 1 eingeformte Ringsicke gebildet ist. Der Füllstutzen 1 ist durch einen insgesamt mit 4 bezeichneten Verschlußdeckel verschließbar. Der Verschlußdeckel 4 ist durch Betätigung des Schwenkhebels innerhalb der Hinterschneidung 3 des Füllstutzens 1 verriegelbar. In dem am Deckelumfang angeordneten Ringspalt 6 des Gehäuses 7 des Verschlußdeckels 4 liegt ein Dichtungsring 8 aus flexiblem Werkstoff ein. Der Dichtungsring 8 ist durch den Schwenkhebel 5 gegen die Innenwand 9 des Füllstutzens 1 radial aufspreizbar und durch seine dabei eintretende Querschnittsdeformation (Fig. 1, 2) gegen die Seitenwände 10, 11 des Ringspalts 6 anpreßbar. Der Verschlußdeckel 4 enthält an zwei einander diametral gegenüberliegenden Seiten jeweils einen mit der Hinterschneidung 3 in Eingriff bringbaren Riegel 12. Der Schwenkhebel 5 ist mit den Riegeln 12 antriebsmäßig verbunden. Der Schwenkweg 13 des Schwenkhebels 5 von der Schließ- (Fig. 1) in die Öffnungsstellung (gestrichelt in Fig. 1) enthält zwei Bereiche, in deren erstem Bereich (Fig. 4 nach Fig. 6) der Schwenkhebel 5 mit dem Dichtungsring 8 in antriebsmäßiger Verbindung steht. Im zweiten Bereich des Schwenkweges 13 (Fig. 6 nach Fig. 8) steht der Schwenkhebel 5 mit dem Riegel 12 in antriebsmäßiger Verbindung.

Innerhalb des Gehäuses 7 ist ein Hubteil 14 axial verschiebbar gelagert. Über den Umfang des Hubteiles 14 verteilt sind an diesem radial nach außen stehende Spreizlamellen 15 mit ihren Freienden in Axialrichtung 16 schwenkbar gelagert. Die Spreizlamellen 15 ragen in den Ringspalt 6 des Verschlußdeckels 4 hinein und tragen am Innenumfang des Dichtungsringes 8 anliegend jeweils ein Ringsegment 17. Die Schwenklager 18 der Spreizlamellen 15 liegen in der einen Verschiebeendstellung (Fig. 6, 8) des Hubteiles 14 oberhalb und in der anderen Verschiebeendstellung (Fig. 1, 2 und 4) des Hubteiles 14 unterhalb der Ebene des Dichtungsringes 8.

Der Schwenkhebel 5 ist um die Drehachse 19 in Axialrichtung 16 schwenkbar außermittig am Gehäuse 7 gelagert. Der Schwenkhebel 5 enthält ein Mitnehmersegment 20. Das Hubteil 14 steht mit dem Mitnehmersegment 20 nur im ersten Schwenkbereich des Schwenkhebels 5 in Eingriff (Fig. 4 - Fig. 6). Das Mitnehmersegment 20 enthält auf seinem Umfang eine Ausnehmung 21, in der im ersten Schwenkbereich (Fig. 4 - Fig. 6) des Schwenkhebels 5 eine vom Hubteil 14 radial abstehende Mitnehmernase 22 einliegt. Der Schwenkhebel 5 greift antriebsmäßig in einen rechtwinklig zur Axialrichtung 16 des Verschlußdeckels 4 verschiebbaren, die beiden einander diametral gegenüberliegenden Riegel 12 beaufschlagenden Steuerschieber 23 ein. Der Schwenkhebel 5 ist ein zweiarmiger Hebel, dessen einer Schenkel die Betätigungshandhabe 24 ist, während der andere Schenkel 25 gelenkig mit dem Steuerschieber 23 verbunden ist. Der die Bedienungshandhabe 24 bildende Schenkel und der andere Schenkel 25 bilden miteinander einen Winkel von etwa 90°. Die Gelenkverbindung zwischen Schwenkhebel 5 und Steuerschieber 23 ist ein Dreh-Schiebegelenk. Zu diesem Zweck weist das Mitnehmersegment 20 im Bereich des Schenkels 25 eine radiale Ausnehmung auf, die die Achse 26 des Steuerschiebers 23 umgreift.

In Schließstellung (Fig. 1, 2 und 4) steht der die Betätigungshandhabe 24 bildende Schenkel des Schwenkhebels 5 etwa rechtwinklig zur Axialrichtung 16 und beaufschlagt dabei den Verschlußdeckel 4. Der andere Schenkel 25 steht in dieser Stellung dem Dichtungsring 8 zugewandt.

Die Verschieberichtung 28 des Steuerschiebers 23 verläuft in der Schwenkebene des Schwenkhebels 5. Der Steuerschieber 23 weist im wesentlichen die Form eines in der rechtwinklig zur Axialrichtung 16 verlaufenden Verschiebeebene liegenden U auf, zwischen dessen Schenkeln 27 das Hubteil 14 angeordnet ist und an dessen das Schenkelverbindungsteil bildender Achse 26 der Schwenkhebel 5 mit seinem Schenkel 25 angreift. Die beiden Riegel 12 liegen - bezogen auf die Mittellängsachse (Axialrichtung 16) - einander diagonal gegenüber. Sie sind rechtwinklig zur Verschieberichtung 28 des Steuerschiebers 23 radial verschiebbar im Gehäuse 7 des Verschlußdeckels 4 gelagert. Mit einem Vorsprung 29 liegen die Riegel 12 in jeweils einer am Steuerschieber 23 im wesentlichen in dessen Verschieberichtung 28 verlaufenden Steuernut 30 ein.

Die im wesentlichen in Längsrichtung (Verschieberichtung 28) verlaufenden Seitenwandungen der Steuernuten 30 bilden einen stumpfen Winkel. Der dem Schwenkhebellager (Achse 19) abgewandte Schenkel 31 der Steuernuten 30 verläuft in Verschieberichtung 28 des Steuerschiebers, während der dem Schwenkhebellager (Drehachse 19) bzw. der Achse 26 zugewandte Schenkel 32 vom Winkelscheitel 33 in Richtung auf die Mittellängsachse 34 des Steuerschiebers 23 verläuft.

Die Innenseiten 35 der beiden Schenkel 27 des Steuerschiebers 23 verlaufen in denjenigen Bereichen etwa parallel zur Verschieberichtung 28 des Steuerschiebers 23, in denen sie dem dem Schwenkhebellager (Drehachse 19) abgewandten Teil (Schenkel 31) der Steuernut 30 benachbart sind. In diesen Bereichen 36 liegen die Innenseiten 35 der beiden Schenkel 27 des Steuerschiebers 23 am Hubteil 14 des Verschlußdeckels 4 an.

Die Innenseiten 35 der beiden Schenkel 27 des Steuerschiebers 23 sind in denjenigen Bereichen 37 als eine in Richtung auf die Steuernut 30 zurücktretende Ausnehmung 38 ausgebildet, in denen sie dem der Drehachse 19 zugewandten Teil der Steuernut 30 benachbart sind.

Die Schenkel 27 des Steuerschiebers 23 sind in Richtung aufeinander (Pfeilrichtung 39 in Fig. 7) einfederbar. Das Hubteil 14 ist hülsenartig ausgebildet und enthält in seinem Innenraum ein Zylinderschloß 40. Der Schloßriegel 41 ist in Radialrichtung verschiebbar innerhalb des Hubteiles 14 gelagert. Er durchsetzt die Hubteilwandung und ist hinter der Hinterschneidung 42 am Verschlußdeckelgehäuse 7 in Eingriff bringbar. Der Betätigungsschenkel 24 des Schwenkhebels 5 ist in seinem in Schließstellung (Fig. 1, 2 und 4) das Hubteil 14 abdeckenden Bereich mit einem Durchtrittsloch 43 zum Durchstecken eines Schlüssels für das Zylinderschloß 40 versehen.

Die in Schließstellung in den Hinterschneidungen 3 des Füllstutzens 1 einliegenden Stirnflächen 44 der Riegel 12 sind mindestens an ihrer dem äußeren Ende des Verschlußdeckels 4 zugewandten Seite abgeschrägt oder abgerundet (Fig. 11) und liegen auch in Öffnungsstellung (Fig. 8, 9) des Schwenkhebels 5 mit dem radial äußeren Teil ihrer Abschrägung oder Abrundung innerhalb der Hinterschneidungen 3.

Zum Schließen und Verriegeln des Verschlußdeckels 4 wird dieser zunächst mit seinem inneren Ende 45 in den Füllstutzen 1 eingeführt, bis der Ringflansch 46 seines Gehäuses 7 auf dem oberen Ende 2 des Füllstutzens 1 aufliegt. In dieser Stellung schnappen die Stirnflächen 44 der beiden Riegel 12 in die Hinterschneidungen 3 des Füllstutzens 1 leicht hinein. In dieser Stellung kann der Verschlußdeckel 4 nur unter Aufwendung einer gewissen, in Axialrichtung 16 nach oben weisenden Zugkraft wieder aus dem Füllstutzen 1 entnommen werden, da der seitens der Schenkel 27 auf die Riegel 12 ausgeübte Federwiderstand zuerst überwunden und die Riegel 12 aus ihrem Eingriff in die Hinterschneidungen 3 ausgerastet werden müßten.

Nachdem der Verschlußdeckel 4 seine Soll-Ausgangslage gegenüber dem Füllstutzen 1 erreicht hat (Fig. 8, 9), wird der Schwenkhebel 5 über den zweiten Bereich seines Schwenkweges 13 entgegen dem Uhrzeigersinn in die aus Fig. 6 und 7 ersichtliche Stellung geschwenkt. Dabei wird der Steuerschieber 23 mit Bezug auf Fig. 4 - 9 nach rechts verschoben. Dabei gleiten die beiden Riegel 12 mit ihren Vorsprüngen 29 innerhalb der Steuernut 30 an deren die Schenkel 32 bildenden Seitenwänden entlang und werden dadurch radial nach außen gedrückt; die Riegel 12 tauchen in die Hinterschneidungen 3 ein. In der in Fig. 6 und 7 dargestellten Mittelstellung der Schwenkbewegung des Schwenkhebels 5 haben die Riegel 12 bereits ihre Riegelendstellung erricht. Der Verschlußdeckel 4 ist gegenüber dem Füllstutzen 1 formschlüssig verriegelt.

Bei Weiterschwenkung des Schwenkhebels 5 durch den ersten Schwenkbereich entgegen dem Uhrzeigersinn aus der in Fig. 6, 7 gezeigten Mittelstellung in die in Fig. 4, 5 gezeigte Schließstellung erfaßt der Schwenkhebel 5 mit der Ausnehmung 21 seines Mitnehmersegments 20 die Mitnehmernase 22 des Hubteiles 14 und drückt das Hubteil 14 in Axialrichtung 16 nach unter. Dabei werden die Spreizlamellen 15 nach Art des Drucklenkers eines Kniehebels radial nach außen gegen den Innenumfang des Dichtungsrings 8 gedrückt. Dadurch wird der Dichtungsring strahlenförmig von innen aufgeweitet und unter Deformierung seines Querschnitts sowohl gegen die Innenwand 9 des Füllstutzens 1 als auch gegen die Seitenwände 10, 11 des Ringspalts 6 im Gehäuse 7 des Verschlußdeckels 4 gepreßt. Durch diese Pressung wird die Dichtung des Verschlußdeckels 4 gegenüber dem Füllstutzen 1 hergestellt. Bei der nach unten gerichteten Bewegung des Hubteiles 14 durchlaufen die Lagerenden 47 der Spreizlamellen 15 ihre Totpunktstellung gegenüber ihren radial äußeren mit den Ringsegmenten 17 versehen, am Dichtungsring 8 anliegenden Enden. In der endgültigen Schließstellung gemäß Fig. 1, 2 und 4 liegen die Lagerenden 47 der Spreizlamellen 15 unterhalb dieser Totpunktstellung. Im Crashfall, d.h. bei Abscherung des oberen Bereichs des Verschlußdeckels bleibt diese Dichtstellung selbsttätig aufrechterhalten.

Bezugszeichenliste
1 Füllstutzen
2 Ende
3 Hinterschneidung
4 Verschlußdeckel
5 Schwenkhebel
6 Ringspalt
7 Gehäuse
8 Dichtungsring

9 Innenwand
10 Seitenwand
11 Seitenwand
12 Riegel
13 Schwenkweg
14 Hubteil
15 Spreizlamelle
16 Axialrichtung
17 Ringsegment
18 Schwenklager
19 Drehachse
20 Mitnehmersegment
21 Ausnehmung
22 Mitnehmernase
23 Steuerschieber
24 Betätigungshandhabe
25 Schenkel
26 Achse
27 Schenkel
28 Verschieberichtung
29 Vorsprung
30 Steuernut
31 Schenkel
32 Schenkel
33 Winkelscheitel
34 Mittellängsachse
35 Innenseite
36 Bereich
37 Bereich
38 Ausnehmung
39 Pfeilrichtung
40 Zylinderschloß
41 Schloßriegel
42 Hinterschneidung
43 Durchtrittsloch
44 Stirnfläche
45 inneres Ende
46 Ringflansch
47 Lagerende

**Patentansprüche**

1. Verschlußeinrichtung eines Behälters, insbesondere eines Flüssigkeitsbehälters an Kraftfahrzeugen, mit einem Füllstutzen (1) und einem zu seiner Betätigung mit einem Schwenkhebel (5) versehenen Verschlußdeckel (4),
- der mit einer Hinterschneidung (3) der Innenwand des Füllstutzens (1) verriegelbar und
- dessen in einem Ringspalt (6) am Verschlußdeckelumfang einliegender Dichtungsring (8) aus flexiblem Werkstoff gegen die Innenwand (9) des Füllstutzens (1) radial aufspreizbar und durch seine dabei eintretende Querschnittsdeformation gegen die Seitenwände (10, 11) des Ringspalts (6) anpreßbar ist, dadurch gekennzeichnet, daß
- der Verschlußdeckel (4) einen mit der Hinterschneidung (3) in Eingriff bringbaren, am Verschlußdeckelgehäuse verschiebbar gelagerten Riegel (12) enthält
und

- der Schwenkhebel (5) bei seinem Schwenkweg (13) von der Schließ- in die Öffnungsstellung
- in einem ersten Bereich mit dem Dichtungsring (8) und
- in einem zweiten Bereich mit dem Riegel (12) in antriebsmäßiger Verbindung steht.

2. Verschlußeinrichtung nach Anspruch 1, dadurch gekennzeichnet,
- daß innerhalb des Verschlußdeckelgehäuses (7) ein Hubteil (14) axial verschiebbar ist,
- daß über den Umfang des Hubteils (14) verteilt an diesem radial nach außen stehende Spreizlamellen (15) mit ihren Freienden in Axialrichtung (16) schwenkbar gelagert sind und
- daß die Spreizlamellen (15) in den Deckelringspalt (6) hineinragen und am Innenumfang des Dichtungsringes (8) anliegende Ringsegmente (17) tragen.

3. Verschlußeinrichtung nach Anspruch 2, dadurch gekennzeichnet,
daß die Schwenklager (18) der Spreizlamellen (15) in der einen Verschiebeendstellung des Hubteiles (14) oberhalb und in der anderen Verschiebeendstellung des Hubteiles (14) unterhalb der Ebene des Dichtungsringes liegen.

4. Verschlußeinrichtung nach Anspruch 2 oder 3, dadurch gekennzeichnet,
- daß der Schwenkhebel (5) in Axialrichtung (16) schwenkbar außermittig am Gehäuse gelagert ist und ein Mitnehmersegment (20) enthält und
- daß das Hubteil (14) nur im ersten Schwenkbereich des Schwenkhebels (5) mit dem Mitnehmersegment (20) in Eingriff steht.

5. Verschlußeinrichtung nach Anspruch 4, dadurch gekennzeichnet,
daß das Mitnehmersegment (20) auf seinem Umfang eine Ausnehmung (21) enthält, in der im ersten Schwenkbereich des Schwenkhebels (5) eine vom Hubteil (14) abstehende Mitnehmernase (22) einliegt.

6. Verschlußeinrichtung nach einem der Ansprüche 2 bis 5, dadurch gekennzeichnet,
daß das Hubteil (14) hülsenartig ausgebildet ist und in seinem Innenraum ein Zylinderschloß (40) enthält.

7. Verschlußeinrichtung nach Anspruch 6, dadurch gekennzeichnet,
daß ein Schloßriegel (41) in Radialrichtung verschiebbar innerhalb des Hubteils (14) gelagert ist, die Hubteilwandung durchsetzt und mit einer Hinterschneidung (42) am Verschlußdeckelgehäuse (7) in Eingriff bringbar ist.

8. Verschlußeinrichtung nach einem oder mehreren der vorhergehenden Ansprüche, dadurch gekennzeichnet,
daß der Schwenkhebel (5) antriebsmäßig in einen rechtwinklig zur Axialrichtung (16) des Verschlußdeckels (4) verschiebbaren, zwei einander diametral gegenüberliegende Riegel (12) beaufschlagenden Steuerschieber (23) eingreift.

9. Verschlußeinrichtung nach Anspruch 8,
dadurch gekennzeichnet,
daß der Schwenkhebel (5) ein zweiarmiger Hebel ist, dessen einer Schenkel die Bedienungshandhabe (24) ist, während der andere Schenkel (25) gelenkig mit dem Steuerschieber (23) verbunden ist.

10. Verschlußeinrichtung nach Anspruch 9,
dadurch gekennzeichnet,
· daß beide Schenkel (24, 25) einen Winkel von etwa 90° miteinander bilden.

11. Verschlußeinrichtung nach Anspruch 10,
dadurch gekennzeichnet,
daß die Gelenkverbindung zwischen Schwenkhebel (5) und Steuerschieber (23) ein Dreh-Schiebegelenk ist.

12. Verschlußeinrichtung nach Anspruch 4 und Anspruch 9, 10 oder 11,
dadurch gekennzeichnet,
daß der mit dem Steuerschieber (23) verbundene Schenkel (25) Teil des Mitnehmersegmentes (20) des Schwenkhebels (5) ist.

13. Verschlußeinrichtung nach einem der Ansprüche 9 bis 12,
dadurch gekennzeichnet,
daß in Schließstellung der die Betätigungshandhabe (24) bildende Schenkel des Schwenkhebels (5) etwa rechtwinklig zur Axialrichtung (16) der Verschlußeinrichtung steht und den Verschlußdeckel (4) beaufschlagt und der andere Schenkel (25) des Schwenkhebels (5) dem Dichtungsring (8) zugewandt steht.

14. Verschlußeinrichtung nach einem der Ansprüche 8 bis 13,
dadurch gekennzeichnet,
daß die Verschieberichtung (28) des Steuerschiebers (23) in der Schwenkebene des Schwenkhebels (5) liegt.

15. Verschlußeinrichtung nach Anspruch 2 und einem der Ansprüche 8 bis 14,
dadurch gekennzeichnet,
daß der Steuerschieber (23) im wesentlichen die Form eines in der Verschiebeebene liegenden U aufweist, zwischen dessen Schenkeln (27) das Hubteil (14) angeordnet ist und an dessen Schenkelverbindungsteil (Achse 26) der Schwenkhebel angreift.

16. Verschlußeinrichtung nach Anspruch 15,
dadurch gekennzeichnet,
daß die Schenkel (27) des Steuerschiebers (23) in Richtung (39) aufeinander einfederbar sind.

17. Verschlußeinrichtung nach einem der Ansprüche 8 bis 16,
dadurch gekennzeichnet,
daß zwei bezogen auf die Mittellängsachse einander diagonal gegenüberliegende Riegel (12) rechtwinklig zur Verschieberichtung (28) des Steuerschiebers (23) radial verschiebbar im Verschlußdeckelgehäuse gelagert sind und mit einem Vorsprung (29) in jeweils einer am Steuerschieber (23) im wesentlichen in dessen Verschieberichtung (28) verlaufenden Steuernut (30) einliegen.

18. Verschlußeinrichtung nach Anspruch 17,
dadurch gekennzeichnet,
daß die im wesentlichen in Verschieberichtung (28) verlaufenden Längswandungen der Steuernuten (30) stumpfe Winkel bilden, deren dem Schwenkhebellager (19) abgewandter Schenkel (31) in Verschieberichtung des Steuerschiebers (23) und deren dem Schwenkhebel (5) zugewandter Schenkel (32) vom Winkelscheitel (33) in Richtung auf die Mittellängsachse (34) des Steuerschiebers verläuft.

19. Verschlußeinrichtung nach Anspruch 18,
dadurch gekennzeichnet,
daß die Innenseiten (35) der Schenkel (27) des Steuerschiebers (23) in denjenigen Bereichen (36) etwa parallel zur Verschieberichtung (28) des Steuerschiebers (23) verlaufen und an einem Verschlußdeckelteil, insbesondere am Hubteil (14) anliegen, in denen sie dem dem Schwenkhebellager (19) abgewandten Teil (31) der Steuernut (30) benachbart sind.

20. Verschlußeinrichtung nach Anspruch 18,
dadurch gekennzeichnet,
daß die Innenseiten (35) der Schenkel (27) des Steuerschiebers (23) in denjenigen Bereichen (37) als Teil einer in Richtung auf die Steuernut (30) zurücktretenden Ausnehmung (38) ausgebildet sind, in denen sie dem dem Schwenkhebellager (19) zugewandten Teil der Steuernut (30) benachbart sind.

21. Verschlußeinrichtung nach einem oder mehreren der vorhergehenden Ansprüche,
dadurch gekennzeichnet,
daß der Betätigungsschenkel (24) des Schwenkhebels in seinem in Schließstellung das Hubteil (14) abdeckenden Bereich mit einem Durchtrittsloch (43) versehen ist.

22. Verschlußeinrichtung nach einem oder mehreren der vorhergehenden Ansprüche,
dadurch gekennzeichnet,
daß die in Schließstellung in den Hinterschneidungen (3) des Füllstutzens (1) einliegenden Stirnflächen (44) der Riegel (12) mindestens an ihrer dem äußeren Ende des Verschlußdeckels (4) zugewandten Seite abgeschrägt oder abgerundet sind und auch in Öffnungsstellung des Schwenkhebels (5) mit dem radial äußeren Teil ihrer Abschrägung oder Abrundung innerhalb der Hinterschneidung (3), insbesondere innerhalb einer in die Innenwand (9) des Füllstutzens (1) eingeformten Ringnut, einliegen.

**Claims**

1. Closure of a tank, in particular of a liquid tank on motor vehicles, with a filling nozzle (1) and a cap (4) which is provided with a pivoted lever (5) for its operation and
 - which can be locked by an undercut (3) in the inner wall of the filling nozzle (1) and
 - whose sealing ring (8), which is of flexible material and rests around the periphery of the cap in an annular gap (6), can be expanded radially against the inner wall (9) of the filling nozzle (1) and, owing to its consequent cross-sectional deformation, can be pressed against the side walls (10, 11) of the annular gap (6), characterized in that

- the cap (4) includes a bolt (12) which is displaceably mounted on the cap housing and can be brought into engagement with the undercut (3) and

- the pivoted lever (5) is in drive-connection in its pivoting travel (13) from the closed position into the open position

- with the sealing ring (8) over a first range and

- with the bolt (12) over a second range.

2. Closure according to Claim 1, characterized in that

- a lifting part (14) is axially displaceable inside the cap housing (7),

- expanding blades (15) are pivotably mounted in distribution around the periphery of the lifting part (14) standing radially outward from the latter and with their free ends in axial direction (16) and

- the expanding blades (15) project into the annular gap (6) of the cap and bear annular segments (17) which lie against the inner periphery of the sealing ring (8).

3. Closure according to Claim 2, characterized in that the pivot bearings (18) of the expanding blades (15) lie above the plane of the sealing ring in one end shifting position of the lifting part (14) and below the plane of the sealing ring in the other end shifting position of the lifting part (14).

4. Closure according to Claim 2 or 3, characterized in that

- the pivoted lever (5) is mounted pivotably in axial direction (16) off-centre on the housing and includes a carrier segment (20) and

- the lifting part (14) is only in engagement with the carrier segment (20) in the first pivoting range of the pivoted lever (5).

5. Closure according to Claim 4, characterized in that the carrier segment (20) includes on its periphery a recess (21), in which a carrier lug (22) protruding from the lifting part (14) rests during the first pivoting range of the pivoted lever (5).

6. Closure according to one of Claims 2 to 5, characterized in that the lifting part (14) is designed in the manner of a sleeve and contains inside it a cylinder lock (40).

7. Closure according to Claim 6, characterized in that a lock bolt (41) is mounted displaceably in radial direction inside the lifting part (14), passes through the wall of the lifting part and can be brought into engagement with an undercut (42) on the cap housing (7).

8. Closure according to one or more of the preceding claims, characterized in that the pivoted lever (5) engages in driving manner in a control slide (23) which is displaceable at right angles to the axial direction (16) of the cap (4) and impinges on two diametrically opposed bolts (12).

9. Closure according to Claim 8, characterized in that the pivoted lever (5) is a two-armed lever, whose one arm is the operating handle (24), while the other arm (25) is linked to the control slide (23).

10. Closure according to Claim 9, characterized in that the two arms (24, 25) form an angle with each other of approximately 90°.

11. Closure according to Claim 10, characterized in that the link between pivoted lever (5) and control slide (23) is a swivel-sliding joint.

12. Closure according to Claim 4 and Claims 9, 10 or 11, characterized in that the arm (25) connected to the control slide (23) is part of the carrier segment (20) of the pivoted lever (5).

13. Closure according to one of Claims 9 to 12, characterized in that, in the closed position, the arm of the pivoted lever (5) forming the operating handle (24) is approximately at right angles to the axial direction (16) of the closure and impinges on the cap (4), and the other arm (25) of the pivoted lever (5) faces the sealing ring (8).

14. Closure according to one of Claims 8 to 13, characterized in that the direction of shifting (28) of the control slide (23) is in the pivoting plane of the pivoted lever (5).

15. Closure according to Claim 2 and one of Claims 8 to 14, characterized in that the control slide (23) has essentially the shape of a U lying in the shifting plane, between whose arms (27) the lifting part (14) is arranged and against whose link between the arms (spindle 26) the pivoted lever acts.

16. Closure according to Claim 15, characterized in that the arms (27) of the control slide (23) are disposed resiliently one against the other in direction (39).

17. Closure according to one of Claims 8 to 16, characterized in that two bolts (12) which are diametrically opposed relative to the longitudinal centre axis are mounted radially displaceably in the cap housing at right angles to the shifting direction (28) of the control slide (23) and rest by a projection (29) in each case in a control groove (30) on the control slide (23), running essentially in the shifting direction (28) of the latter.

18. Closure according to Claim 17, characterized in that the longitudinal walls of the control grooves (30), running essentially in shifting direction (28), form obtuse angles, whose side (31) facing away from the pivoted lever bearing (19) runs in the shifting direction of the control slide (23) and whose side (32) facing toward the pivoted lever (5) runs from the angle apex (33) toward the longitudinal centre axis (34) of the control slide.

19. Closure according to Claim 18, characterized in that the inner sides (35) of the arms (27) of the control slide (23) run approximately parallel to the shifting direction (28) of the control slide (23) and lie against a part of the cap, in particular against the lifting part (14), in those regions (36) in which they are adjacent to the part (31) of the control groove (30) facing away from the pivoted lever bearing (19).

20. Closure according to Claim 18, characterized in that the inner sides (35) of the arms (27) of the control slide (23) are disigned as part of a recess (38) receding toward the control groove (30), in those regions (37) in which they are adjacent to the part of the control groove (30) facing toward the pivoted lever bearing (19).

21. Closure according to one or more of the preceding claims, characterized in that the operating arm (24) of the pivoted lever is provided in its region covering the lifting part (14) in closed position with a through-hole (43).

22. Closure according to one or more of the preceding claims, characterized in that the end faces (44) of the bolts (12) resting in the undercuts (3) of the filling nozzle (1) in closed position are bevelled or rounded of at least on their side facing toward the outer end of the cap (4) and, even in opening position of the pivoted lever (5), rest with the radially outer part of their bevelling or rounding within the undercut (3), in particular within an annular groove formed in the inner wall (9) of the filling nozzle (1).

## Revendications

1. Dispositif de fermeture pour récipient, en particulier pour un réservoir de liquide de véhicule automobile, qui comprend une tubulure de remplissage (1) et un bouchon (4) muni d'un levier (5) pour sa manoeuvre,
- qui peut être verrouillé dans un rentrant (3) de la paroi interne de la tubulure de remplissage (1), et
- dont la bague d'étanchéité (8) en matériau souple, qui est logée dans une fente annulaire (6) prévue sur le périmètre du bouchon, peut être élargie radialement en s'appliquant contre la paroi interne (9) de la tubulure de remplissage (1) et peut être pressée contre les parois latérales (10, 11) de la fente annulaire (6) sous l'effet de la déformation en section qui se produit dans cette action,
    caractérisé en ce que
- le bouchon (4) contient un pêne (12) monté coulissant dans le corps du bouchon et qui peut être mis en prise dans le rentrant (3), et
- dans sa course de pivotement (13), de la position de fermeture à la position d'ouverture, le levier (5)
- est en liaison cinématique avec la bague d'étanchéité (8) dans une première région et
- est en liaison cinématique avec le pêne (12) dans une deuxième région.

2. Dispositif de fermeture selon la revendication 1, caractérisé en ce que:
- un piston (14) est monté pour coulisser axialement à l'intérieur du corps (7) du bouchon,
- des lamelles d'élargissement (15) qui sont montées réparties sur la périphérie du piston (14) et font saillie radialement vers l'extérieur sur ce piston, sont articulées par leurs extrémités libres pour pouvoir pivoter dans la direction axiale (16), et
- les lamelles d'élargissement (15) font saillie à l'intérieur de la fente annulaire (6) du bouchon et portent des segments de couronne (17) qui sont en appui contre la périphérie intérieure de la bague d'étanchéité (8).

3. Dispositif de fermeture selon la revendication 2, caractérisé en ce que les articulations (18) des lamelles d'élargissement (15) se trouvent au-dessus du plan de la bague d'étanchéité dans une position extrême de translation du piston (14) et au-dessous de ce plan dans l'autre position extrême de translation du piston (14).

4. Dispositif de fermeture selon la revendication 2 ou la revendication 3, caractérisé en ce que
- le levier (5) est monté sur le corps en un point excentré pour pouvoir pivoter dans la direction axiale (16) et comprend un secteur d'entraîement (20), et
- le piston (14) n'est en prise avec le secteur d'entraînement (20) que dans la première région du pivotement du levier (5).

5. Dispositif de fermeture selon la revendication 4, caractérisé en ce que le secteur d'entraînement (20) présente sur sa périphérie une encoche (21) dans laquelle une dent d'entraînement (22) qui fait saillie sur le piston (14) est engagée dans la première région de pivotement du levier (5).

6. Dispositif de fermeture selon l'une des revendications 2 à 5, caractérisé en ce que le piston (14) présente la forme d'une douille et renferme une serrure à barillet (40) dans son volume intérieur.

7. Dispositif de fermeture selon la revendication 6, caractérisé en ce qu'un pêne de serrure (41) est monté pour coulisser dans la direction radiale à l'intérieur du piston (14), traverse la paroi de la piston et peut être mis en prise avec un rentrant (42) du corps (7) du bouchon.

8. Dispositif de fermeture selon une ou plusieurs des revendications précédentes, caractérisé en ce que le levier (5) est en prise cinématique avec un coulisseau de commande (23) qui peut coulisser perpendiculairement à la direction axiale (16) du bouchon (2) et qui agit sur deux pênes (12) diamétralement opposés.

9. Dispositif de fermeture selon la revendication 8, caractérisé en ce que le levier (5) est un levier du premier genre dont une branche forme la poignée de manoeuvre (24) tandis que l'autre branche (25) est articulée sur le coulisseau de commande (23).

10. Dispositif de fermeture selon la revendication 9, caractérisé en ce que les deux branches (24, 25) forment entre elles un angle d'environ 90°.

11. Dispositif de fermeture selon la revendication 10, caractérisé en ce que l'articulation entre le levier (5) et le coulisseau de commande (23) est une articulation à rotation et translation.

12. Dispositif de fermeture selon la revendication 4 et la revendication 9, 10 ou 11, caractérisé en ce que la branche (25) reliée au coulisseau de commande (23) fait partie du secteur d'entraînement (20) du levier (5).

13. Dispositif de fermeture selon l'une des revendications 9 à 12, caractérisé en ce que, dans la position de fermeture, la branche du levier (5) qui forme la poignée de manoeuvre (24) est orientée à peu près perpendiculairement à la direction axiale (16) du dispositif de fermeture et agit sur le bouchon (4) tandis que l'autre branche (25) du levier (5) est orientée vers la bague d'étanchéité (8).

14. Dispositif de fermeture selon l'une des revendications 8 à 13, caractérisé en ce que la direction de translation (28) du coulisseau de commande (23) est contenue dans le plan de pivotement du levier (5).

15. Dispositif de fermeture selon la revendication 2 et une des revendications 8 à 14, caractérisé en ce que le coulisseau de commande (23) présente essentiellement la forme d'un U contenu dans le plan de translation, entre les branches (27) duquel le piston (14) est disposé et dont la partie de liaison des branches (axe 26) est attaquée par le levier.

16. Dispositif de fermeture selon la revendication 15, caractérisé en ce que les branches (27) du coulisseau de commande (23) peuvent se rapprocher élastiquement l'une de l'autre dans la direction (39).

17. Dispositif de fermeture selon l'une des revendications 8 à 16, caractérisé en ce que deux pênes (12) disposés en diagonale par rapport à l'axe longitudinal médian sont montés dans le corps du bouchon de façon à pouvoir coulisser radialement perpendiculairement à la direction de translation (28) du coulisseau de commande (23) et sont engagés, chacun par une saillie (29) dans une rainure de commande (30) formée sur le coulisseau de commande (23) et qui s'étend sensiblement dans la direction de translation (28) de ce coulisseau.

18. Dispositif de fermeture selon la revendication 17, caractérisé en ce que les parois longitudinales des rainures de commande (30), qui s'étendent sensiblement dans la direction de la translation (28), forment des angles obtus dont la branche (21) éloignée de l'articulation (19) du levier s'étend dans la direction de la translation du coulisseau de commande (23) et dont la branche (32) qui est la plus proche du levier (5) part du sommet (33) de l'angle en se dirigeant vers l'axe longitudinal médian (34) du coulisseau de commande.

19. Dispositif de fermeture selon la revendication 18, caractérisé en ce que les côtés intérieurs (35) des branches (27) du coulisseau de commande (23) s'étendent à peu près parallèlement à la direction de la translation (28) du coulisseau de commande (23) et sont appuyées contre une pièce du bouchon, notamment contre le piston (14), dans les régions (36) dans lesquelles ils sont adjacents à la partie (31) de la rainure de commande (30) qui est éloignée de l'articulation (19) du levier.

20. Dispositif de fermeture selon la revendication 18, caractérisé en ce que, dans les régions (37) dans lesquelles ils sont proches de la partie de la rainure de commande (30) qui est dirigée vers l'articulation (19) du levier, les côtés intérieurs (35) des branches (27) du coulisseau de commande (23) forment une partie d'un évidement (38) qui rentre vers la rainure de commande (30).

21. Dispositif de fermeture selon une ou plusieurs des revendications précédentes, caractérisé en ce que la branche de manoeuvre (24) du levier est munie d'un trou traversant (43) dans sa région qui recouvre le piston (14) dans la position de fermeture.

22. Dispositif de fermeture selon une ou plusieurs des revendications précédentes, caractérisé en ce que les surfaces frontales (44) des pênes (12) qui sont engagées dans les rentrants (3) de la tubulure de remplissage (1) dans la position de fermeture sont chanfreinées ou arrondies, au moins sur leur côté qui est dirigé vers l'extrémité extérieure du bouchon (4) et en ce que, même dans la position d'ouverture du levier (5), elles sont engagées par la partie radialement extérieure de leur chanfrein ou de leur arrondi à l'intérieur du rentrant (3), en particulier à l'intérieur d'une rainure annulaire formée dans la paroi interne (19) de la tubulure de remplissage (1).

FIG.1

FIG.2

FIG.3

FIG.4

FIG.5

FIG.6

FIG.7

FIG.8

FIG.9

FIG.10

FIG.11